Europäisches Patentamt

(19) European Patent Office

Office européen des brevets

(11) Veröffentlichungsnummer: **0 352 561**
**A2**

(12) **EUROPÄISCHE PATENTANMELDUNG**

(21) Anmeldenummer: **89112887.8**

(22) Anmeldetag: **14.07.89**

(51) Int. Cl.⁴: **C08G 63/688** , **C08G 63/64**

(30) Priorität: **27.07.88 DE 3825410**

(43) Veröffentlichungstag der Anmeldung:
**31.01.90 Patentblatt 90/05**

(84) Benannte Vertragsstaaten:
**DE FR GB IT**

(71) Anmelder: **BAYER AG**

**D-5090 Leverkusen 1 Bayerwerk(DE)**

(72) Erfinder: **Pielartzik, Harald, Dr.**
**Doerperhofstrasse 39**
**D-4150 Krefeld(DE)**
Erfinder: **Brinkmeyer, Hermann, Dr.**
**Carl-Duisberg-Strasse 23**
**D-4150 Krefeld 11(DE)**
Erfinder: **Meyer, Rolf-Volker, Dr.**
**Buchheimer Strasse 23**
**D-4150 Krefeld(DE)**
Erfinder: **Willenberg, Bernd, Dr.**
**Feldstrasse 94**
**D-5060 Bergisch Gladbach 2(DE)**

(54) Thermotrope, vollaromatische Polykondensate, Verfahren zu ihrer Herstellung und ihre Verwendung zur Herstellung von Formkörpern, Fasern, Filamenten, Folien und Filmen.

(57) Die erfindungsgemäßen thermotropen, vollaromatischen Polykondensate, die zur Komplexbildung befähigte Verbindungen enthalten, zeichnen sich durch eine verbesserte Hydrolysestabilität aus und finden Verwendung zur Herstellung von Formkörpern, Fasern, Filamenten, Folien und Filmen.

EP 0 352 561 A2

# Thermotrope, vollaromatische Polykondensate, Verfahren zu ihrer Herstellung und ihre Verwendung zur Herstellung von Formkörpern, Fasern, Filamenten, Folien und Filmen

Die Erfindung betrifft hochmolekulare, thermotrope, vollaromatische Polykondensate mit verbesserter Hydrolysestabilität, ein Verfahren zu ihrer Herstellung und ihre Verwendung zur Herstellung von Formkörpern, Folien, Filmen, Filamenten und Fasern.

Thermotrope bzw. mesomorphe, vollaromatische Polykondensate, wie Polyester und Polyestercarbonate, die zur Herstellung von Formkörpern, Filamenten, Fasern und Folien verwendet werden, werden beispielsweise beschrieben in der DE-OS 33 25 704 und in der DE-OS 34 15 530. In den genannten Offenlegungsschriften wird auch der Begriff "mesomorph" bzw. "thermotrop" erläutert. Außerdem, wird dort auch die übliche Untersuchungsmethode des flüssigkristallinen Zustandes von Polymerschmelzen dargelegt.

Die nach den bekannten Verfahren (vgl. z.B. EP 0 132 631, DE 3 517 948 und EP 0 170 935) hergestellten thermotropen, vollaromatischen Polyestercarbonate und Polyester weisen zwar gute mechanische Eigenschaften und ein vorteilhaftes rheologisches Verhalten auf, doch ist die Hydrolysestabilität dieser Polykondensate für einige Anwendungsbereiche nicht ausreichend. So ist zu beachten, daß sich an der Oberfläche von Teilen aus den aromatischen, thermotropen Polyestercarbonaten und Polyestern bei der Einwirkung von Wasser in Abhängigkeit von der Temperatur mehr oder weniger schnell Blasen bilden und die Festigkeit und Zähigkeit der aromatischen thermotropen Polykondensate dadurch stark vermindert wird.

Die vorliegende Erfindung betrifft nun thermotrope vollaromatische Polykondensate auf Basis von

    a) gegebenenfalls substituierten aromatischen Hydroxycarbonsäuren

    b) Diphenolen

    c) aromatischen Dicarbonsäuren und

    d) gegebenenfalls Kohlensäure, dadurch gekennzeichnet, daß sie zur Komplexbildung befähigte Verbindungen enthalten.

Als zur Komplexbildung befähigte Verbindungen kommen solche in Frage, die die Hydrolysestabilität der thermotropen, vollaromatischen Polykondensate verbessern ohne deren mechanische Eigenschaften zu beeinträchtigen.

Zur Komplexbildung bzw. Chelatbildung befähigte Verbindungen sind in der Literatur bekannt und werden beispielsweise beschrieben in Bell, Principles and Applications of Metal Chelatation, London, Univ. Press., 1977 und in Römpps Chemie-Lexikon, Band 1, A-Cl, 8. Auflage, Fränkische Verlagshandlung, Stuttgart, 1979.

Aus den bekannten komplexbildenden bzw. chelatbildenden Verbindungen können leicht durch geeignete Vorversuche solche ausgewählt werden, die die Hydrolysestabilität der thermotropen, vollaromatischen Polykondensate verbessern.

In Frage kommen beispielsweise Komplexbildner mit zwei-oder mehrzähnigen Liganden, wie Ethylendiamintetraessigsäure, Glycerin, Mannit, Thioglykolsäure, Salicylaldoxim und/oder aromatische Sulfonsäuren, die mindestens zwei zur Komplexbildung befähigte funktionelle Gruppen in Ortho- oder Peristellung besitzen. Geeignet als Komplexbildner ist beispielsweise auch Fluorwasserstoff.

Besonders bevorzugt sind die zur Komplexbildung befähigten aromatischen Sulfonsäuren. Genannt seien beispielsweise Hydroxyarylsulfonsäuren, wie Phenol-2-sulfonsäure, 1-Naphthol-2-sulfonsäure, 1-Naphthol-8-sulfonsäure und 2-Naphthol-1-sulfonsäure; Dihydroxyarylsulfonsäuren, wie Hydrochinonsulfonsäure, 2,7-Dihydroxynaphthalin-3-sulfonsäure, 3,6-Dihydroxy-2-sulfonsäure und 2,3-Dihydroxynaphthalin-6-sulfonsäure; Hydroxyaryldisulfonsäuren, wie Phenol-2,4-disulfonsäure, 1-Naphthol-2,5-disulfonsäure, 2-Naphthol-3,7-disulfonsäure und 1-Naphthol-4,8-disulfonsäure; Dihydroxyaryldisulfonsäuren, wie Hydrochinon-2,5-disulfonsäure, 2,7-Dihydroxynaphthalin-3,6-disulfonsäure, 1,8-Dihydroxynaphthalin-3,6-disulfonsäure und 2,6-Dihydroxynaphthalin-3,6-disulfonsäure; höhersubstituierte Hydroxyarylsulfonsäuren, wie 1-Naphthol-2,4,8-trisulfonsäure, 2-Naphthol-3,6,8-trisulfonsäure, 1-Naphthol-3,6,8-trisulfonsäure, 1-Naphthol-3,8-disulfonsäure und 1-Naphthol-4,8-disulfonsäure sowie aromatische Carbonsulfonsäuren, wie 2-Sulfobenzoesäure, 5-Sulfosalicylsäure, 4-Hydroxy-3-sulfobenzoesäure, 1-Hydroxy-4,7-disulfo-2-naphthalincarbonsäure, 3-Hydroxy-5-sulfo-2-naphthalin-carbonsäure, 3-Hydroxy-7-sulfo-2-naphthalin-carbonsäure und 3,5-Dihydroxy-7-sulfo-2-naphthalincarbonsäure.

Besonders bevorzugt werden als zur Komplexbildung befähigte aromatische Sulfonsäuren eingesetzt: Phenol-2-sulfonsäure, 1-Naphthol-2-sulfonsäure, 2-Naphthol-1-sulfonsäure, 1-Naphthol-8-sulfonsäure, Hydrochinonsulfonsäure, Hydrochinon-2,5-disulfonsäure, 1,8-Dihydroxynaphthalin-3,6-disulfonsäure, 2,7-Dihydroxy-naphthalin-3,6-disulfonsäure, 2-Sulfobenzoesäure, 5-Sulfosalicylsäure, 4-Hydroxy-3-sulfo-benzoesäure und/oder 1-Hydroxy-4,7-disulfo-2-naphthalincarbonsäure.

2

Die aromatischen Sulfonsäuren können noch über weitere Substituenten verfügen, wie Alkyl-, Alkoxy-, Aryl-, Aryloxy- sowie Halogengruppen. Außerdem können die aromatischen Sulfonsäuren benzannelliert sein. Die aromatischen Sulfonsäuren können entweder als freie Säuren oder in Form ihrer Salze eingesetzt werden. Auch Mischungen von Säuren und Salzen sind möglich.

Entsprechend der Anzahl der Sulfonsäuregruppen pro Molekül können partielle oder vollständige Salze eingesetzt werden. Natürlich sind auch gemischte Salze geeignet. Beim Einsatz von Salzen sind die Haupt- und Nebengruppenmetallsalze der aromatischen Sulfonsäuren geeignet, vorzugsweise die Ammonium-, Alkali- und/oder Erdalkalisalze, insbesondere die Natrium- und/oder Kaliumsalze.

Die erfindungsgemäßen thermotropen, vollaromatischen Polykondensate enthalten die zur Komplexbildung befähigten Verbindungen im allgemeinen in Mengen von etwa 1 bis 1000 ppm, bevorzugt 10 bis 500 ppm, bezogen auf die Summe der Menge an Ausgangskomponenten a) bis d). Dabei hängt der Gehalt an komplexbildenden Verbindungen in den thermotropen vollaromatischen Polykondensaten im wesentlichen von der Reinheit der eingesetzten Ausgangskomponenten a) bis d) ab sowie von der Art der zur Herstellung der thermotropen vollaromatischen Polykondensate eingesetzten Katalysatoren. Der günstigste Gehalt an komplexbildenden Verbindungen in entsprechenden thermotropen vollaromatischen Polykondensaten kann leicht durch Vorversuche ermittelt werden, wobei die Hydrolysebeständigkeit des Polykondensats als wesentliches Kriterium gilt.

Die für die erfindungsgemäßen thermotropen, vollaromatischen Polykondensate in Frage kommenden gegebenenfalls substituierten aromatischen Hydroxycarbonsäuren (Komponente a)), Diphenole (Komponente b)) und aromatischen Dicarbonsäuren (Komponente c)) sind bekannt und beispielsweise beschrieben in EP 132 637, 131 846, 134 959, DE 3 325 705, 3 325 703, 2 704 315 und 2 025 971.

Bevorzugt werden eingesetzt als Komponente a) p-Hydroxybenzoesäure und/oder 6-Hydroxy-naphthalin-2-carbonsäure; als Komponente b) Hydrochinon, 4,4'-Dihydroxydiphenyl und/oder 2,6-Dihyroxnaphthalin und als Komponente c) Terephthalsäure und/oder Isophthalsäure.

Die Kohlensäure kann bekannterweise in Form von Diarylcarbonaten, wie Diphenylcarbamat, eingesetzt werden.

Ein weiterer Gegenstand der vorliegenden Erfindung ist ein Verfahren zur Herstellung von thermotropen, vollaromatischen Polykondensaten durch Veresterung von gegebenenfalls substituierten p-Hydroxybenzoesäuren und aromatischen Dicarbonsäuren mit Diarylcarbonat, Umesterung der erhaltenen Arylester mit Diphenolen, gegebenenfalls weiterem Diarylcarbonat, in Gegenwart von gegebenenfalls Kettenabbrechern und anschließende Polykondensation bei Temperaturen von etwa 150 bis 350°C in Gegenwart von Katalysatoren gegebenenfalls unter vermindertem Druck.

Nach einer anderen Verfahrensvariante ist es möglich die zur Komplexbildung befähigten Verbindungen in die nach üblichen Methoden hergestellten thermotropen, vollaromatischen Polykondensate durch nachfolgende Compoundierung in bekannter Weise einzuarbeiten.

Bevorzugt ist jedoch die Variante, nach der die komplexbildenden Verbindungen schon bei der Herstellung der thermotropen, vollaromatischen Polykondensate zugesetzt werden, d.h. zu jedem Zeitpunkt des Reaktionsverlaufs (Umesterungsreaktion oder Polykondensationsreaktion). Ganz besonders bevorzugt ist die Zugabe der komplexbildenden Verbindungen vor der eigentlichen Reaktion der Ausgangskomponenten.

Die Herstellung der erfindungsgemäßen thermotropen, vollaromatischen Polykondensate nach dem Schmelzumesterungsverfahren ist an sich bekannt und beispielsweise näher beschrieben in EP 0 132 637, DE 2 704 315 und DE 2 025 971.

Ebenfalls bekannt sind die dazu geeigneten Katalysatoren die die Ver- bzw. Umesterungsreaktion als auch die Polykondensationsreaktion katalytisch zu beschleunigen vermögen. In diesem Zusammenhang wird verwiesen auf die EP 0 132 637.

Zur Herstellung der erfindungsgemäßen thermotropen, vollaromatischen Polykondensate eignen sich besonders Alkylzinncarboxylate, wie Tributylzinnacetat und/oder Di-n-butylzinndilauriat, oder Alkalicarboxylate, wie das Kaliumsalz der Benzoesäure, insbesondere das Kaliumsalz der Parahydroxybenzoesäure, oder Imidazol. Werden solche Katalysatoren eingesetzt, dann ist der Effekt der Hydrolysestabilität bei Einsatz der komplexbildenden Verbindungen, insbesondere der komplexbildenden aromatischen Sulfonsäuren, besonders ausgeprägt.

Die nach dem erfindungsgemäßen Verfahren hergestellten thermotropen Polykondensate besitzen in der Regel eine inhärente Viskosität von mindestens 1,0 dL/g (gemessen an einer Lösung von 5 mg Polymer/ml Pentafluorphenol bei 60°C).

Zur Erhöhung der Molekulargewichte können die Polykondensate, vorzugsweise in Granulatform, noch einer Festphasenkondensation unter Inertgasatmosphäre oder unter Vakuum bei Temperaturen von etwa 150 bis 300°C unterworfen werden.

Gelegentlich wird eine Molekulargewichtsregelung bei den Polykondensaten erwünscht, die durch die Polykondensationsreaktionen abbrechende, monofunktionelle Verbindungen erreicht werden kann. Solche monofunktionelle Verbindungen sind bekannt und beispielsweise beschrieben in US 4 269 964 und US 4 677 184.

Die erfindungsgemäßen thermotropen, vollaromatischen Polykondensate können wegen ihrer relativ geringen Schmelzviskosität vorteilhaft aus der Schmelze zu Spritzgußformteilen, Fasern, Filamenten, Folien und Filmen verarbeitet werden. Durch den Zusatz von zur Komplexbildung befähigten Verbindungen wird die Hydrolysestabilität der thermotropen, vollaromatischen Polykondensate wesentlich gesteigert, was sich positiv auf die Eigenschaften der aus den Polykondensaten hergestellten Produkte auswirkt.

Beispiele

Die Prüfung der Kerbschlagzähigkeit ($a_k$) erfolgte gemäß DIN 53 453 (ISO/R 179) bei 23°C jeweils an 10 Prüfkörpern.

Allgemeine Herstellungsvorschrift:

In einem Reaktionsgefäß mit Rührer, Kolonne und Destillierbrücke wurden 305,0 g p-Hydroxybenzoesäure, 112,2 g Hydrochinon, 31,6 g 4,4'-Dihydroxydiphenyl, 28,2 g Terephthalsäure, 779,3 g Diphenylcarbonat und der Umesterungskatalysator eingewogen und bis zum Beginn der $CO_2$-Abspaltung aufgeheizt. Die Innentemperatur wurde im Verlauf von 2 h auf 220°C erhöht und bis zum Ende der $CO_2$-Entwicklung konstant gehalten. Das Reaktionsgemisch wurde auf 250°C aufgeheizt und im Verlauf von 1,5 h wurde der Druck im Reaktor schrittweise auf 30 mbar erniedrigt. Nach 1 h hatte die Destillationsgeschwindigkeit soweit nachgelassen, daß die Innentemperatur auf 275°C und anschließend auf 300°C erhöht werden konnte. Nachdem die Phenolabspaltung weitgehend abgeschlossen war, wurde der Druck im Reaktionsgefäß auf 0,2 mbar erniedrigt. Nach 1 h unter diesen Kondensationsbedingungen war die Reaktion beendet. Das erhaltene Produkt war von heller Farbe und wies eine ausgeprägte Faserstuktur auf. Es wurde bei einer Massetemperatur von T = 330°C und einer Formtemperatur von 70°C verspritzt.

Zur Prüfung der Hydrolysestabilität wurden Prüfkörper der Dimension 80 x 10 x 4 mm bei einer Temperatur von 100°C in Wasser gelagert und in Abhängigkeit der Lagerzeit wurde die Kerbschlagzähigkeit ermittelt.

Die Ergebnisse sind in Tabelle 1 bei Verwendung verschiedener Umesterungskatalysatoren zusammengefaßt.

Der Abfall der Schlagzähigkeit bei Lagerung in Wasser ist vom eingesetzten Umesterungskatalysator abhängig.

**Tabelle 1**  Hydrolysebeständigkeit in Abhängigkeit vom eingesetzten Umesterungskatalysator

| Versuch | Art des Katalysator | Konzentration (%) des Katalysators bezogen auf das Polykondensat ak $[kJ/m^2]$ | Kerbschlagzähigkeit $a_k$ in Abhängigkeit von der Hydrolysezeit in Wasser bei $100^0$ C | | | | Restkerbschlag-zähigkeit nach 100 Stunden (%) |
|---|---|---|---|---|---|---|---|
| | | | 0 | 10 | 50 | 100 [t(h)] | |
| 1 | Natriumphenolat | 0,005 | 57 | 40 | 25 | 5 | 8,8 |
| 2 | Dibutylzinndi-laurat | 0,04 | 55 | 45 | 30 | 10 | 18,2 |
| 3 | Titantetraiso-propylat | 0,04 | 60 | 38 | 24 | 8 | 13,3 |
| 4 | p-Hydroxybenzoe-säure-K-Salz | 0,02 | 50 | 42 | 30 | 20 | 40,0 |
| 5 | Zinkacetat | 0,04 | 57 | 44 | 35 | 30 | 70,2 |
| 6 | Imidazol | 0,1 | 58 | 50 | 45 | 40 | 69,0 |
| 7 | – | – | 53 | 48 | 30 | 17 | 32,1 |

EP 0 352 561 A2

Zur Überprüfung der hydrolysestabilisierenden Wirkung der Komplexbildner wurden nachfolgend genannte Verbindungen:

a) von Beginn an mit den Monomeren eingewogen,

b) nach Abspaltung von ca. 75 % der Phenolmenge zugegeben oder

c) in das fertige Polymer eincompoundiert.

Verbindungen:

Phenol-2-sulfonsäure,
1-Naphthol-8-sulfonsäure,
2,3-Dihydroxynaphthalin-6-sulfonsäure,
Hydrochinonsulfonsäure,
1-Naphthol-4,8-disulfonsäure,
Hydrochinondisulfonsäure,
1,8-Dihydroxynaphthalin-3,6-disulfonsäure,
2,7-Dihydroxynaphthalin-3,6-disulfonsäure,
5-Sulfosalicylsäure,
1-Naphthol-4-sulfonsäure und
Phenol-3-sulfonsäure.

Zur Prüfung der Hydrolysestabilität wurden die Granulate in 100° C heißem Wasser (Rückfluß) gelagert und nach 250 h die Lösungsviskositäten bestimmt.
Die Ergebnisse sind in Tabelle 2 zusammengefaßt.
Als Katalysator wurde Dibutylzinndilaurat verwendet:

**Tabelle 2**   Lösungsviskositäten in Abhängigkeit der Hydrolysezeit ($\eta_{rel}$ bestimmt in p-Chlorphenol, T = 60°C)Menge: 0,5 g/105 ml p-Chlorphenol)

| Versuch Nr. | Komplexbildner/Zugabe nach Art a) | Hydrolysezeit (h) | |
|---|---|---|---|
| | | $\eta_{rel}$  (0) | (250) |
| Vergleich ohne Komplexbildner | | 3,05 | 1,75 |
| 8 | 2-Phenolsulfonsäure | 2,88 | 2,21 |
| 9 | 1-Naphthol-8-sulfonsäure | 3,21 | 2,48 |
| 10 | 2,3-Dihydroxynaphthalin-6-sulfonsäure | 2,94 | 2,24 |
| 11 | Hydrochinondisulfonsäure | 2,87 | 2,45 |
| 12 | 1-Naphthol-4,8-disulfonsäure | 2,97 | 2,45 |
| 13 | Hydrochinondisulfonsäure | 2,87 | 2,29 |
| 14 | 1,8-Dihydroxynaphthalin-3,6-disulfonsäure | 3,06 | 2,75 |
| 15. | 2,7-Dihydroxynaphthalin-3,6-disulfonsäure | 3,10 | 2,41 |
| 16 | 5-Sulfosalicylsäure | 3,03 | 2,73 |
| 17 | 3-Sulfosalicylsäure | 2,89 | 2,54 |
| 18 | Phenol-3-sulfonsäure (Vergleich) | 2,91 | 1,69 |
| 19 | 1-Naphthol-4-sulfonsäure (Vergleich) | 3,11 | 1,83 |

Versuche 18 und 19 zeigen, daß bei fehlender Komplexbildungsmöglichkeit der Sulfonsäuren das Hydrolyseverhalten der Polykondensate sich deutlich verschlechtert. Das gleiche gilt, wenn kein Komplexbildner dem Polymeren zugegeben wurde.

Tabelle 2a

| Lösungsviskosität in Abhängigkeit der Hydrolysezeit (Zugabeart b + c) | | | | |
|---|---|---|---|---|
| Versuch Nr. | Komplexbildner | Zugabeart | Hydrolysezeit (h) | |
| | | | (0) | (250) |
| 20 | 2-Phenolsulfonsäure | b $\eta_{rel}$ | 3,14 | 2,20 |
| | | c | 2,97 | 2,34 |
| 21 | Hydrochinondisulfonsäure | b | 3,04 | 2,45 |
| | | c | 3,11 | 2,38 |
| 22 | 1,8-Dihydroxynaphthalin-3,6-disulfonsäure | b | 2,87 | 2,61 |
| | | c | 3,00 | 2,65 |
| 23 | 5-Sulfosalicylsäure | b | 2,95 | 2,61 |
| | | c | 2,87 | 2,48 |
| 24 | Phenol-3-sulfonsäure (Vergleich) | b | 3,11 | 1,70 |
| | | c | 3,08 | 1,54 |

Die Wirkung der Salze verschiedener komplexbildender aromatischer Sulfonsäuren wird durch die in Tabelle 3 zusammengefaßten Beispiele demonstriert.

Folgende Sulfonsäure-K-Salze wurden eingesetzt:

A: 2-Phenolsulfonsäure-K-Salz

B: Phenol-3-sulfonsäure-K-Salz

C. 1-Naphthol-8-sulfonsäure-K-Salz

D: 1-Naphthol-4-sulfonsäure-K-Salz

E: Hydrochinonsulfonsäure-K-Salz

F: Hydrochinon-2,5-disulfonsäure-K-Salz

G: 2,7-Dihydroxynaphthalin-3,6-disulfonsäure-K-Salz.

Diese Salze können sowohl der Monomermischung vor der Reaktion zugegeben als auch nachträglich in das fertige Polymere eincompoundiert werden.

Die Beispiele 8 bis 19, 20 bis 24 und 25 bis 34 demonstieren den Struktureinfluß unterschiedlicher Sulfonsäuren und Sulfonsäuresalze.

Aus Beispiel 26 und 28 geht hervor, daß bei Störung der komplex- bzw. chelatbildenden Struktur (Phenol-3-sulfonsäure oder 1-Naphthol-4-sulfonsäure) die stabilisierende Wirkung verloren geht. Die Kerbschlagzähigkeit beträgt nach 100 Stunden nur noch 15 bzw. 17 % im Vergleich zu 70 bis 88 % bei chelatbildenden Strukturen. Die stabilisierende Wirkung von Sulfonsäuresalzen bei unterschiedlichen Umesterungskatalysatoren wird durch die Beispiele in Tabelle 3 ebenfalls deutlich herausgestellt.

Der Einfluß der Stabilisatorkonzentration wird anhand der Beispiele 36 bis 38 demonstriert.

Im Vergleich zu nicht stabilisierten Polymeren wird die Hydrolysestabilität von LC-Polymeren deutlich verbessert.

**Tabelle 3**  Kerbschlagzähigkeit in Abhängigkeit der Hydrolysezeit

| Versuch Nr. | Katalysator*) | Komplexbildner | Konz. (ppm) des Komplexbildners | Kerbschlagzähigkeit ($a_k$) in Abhängigkeit von der Hydrolysezeit in Wasser bei 100°C | | | | Restkerbschlagzähigkeit nach 100 Std. (%) |
|---|---|---|---|---|---|---|---|---|
| | | | | $a_k$ [kJ/m²] $\longrightarrow$ 0 | 10 | 50 | 100 (h) | |
| 25 | Dibutylzinn-laurat | A | 50 | 58 | 53 | 47 | 40 | 69 |
| 26 | " | B (Vergleich) | 50 | 55 | 43 | 27 | 8 | 15 |
| 27 | " | C | 50 | 57 | 50 | 49 | 42 | 73 |
| 28 | " | D (Vergleich) | 50 | 59 | 40 | 32 | 10 | 17 |
| 29 | " | E | 50 | 60 | 58 | 55 | 53 | 88 |
| 30 | " | F | 50 | 54 | 55 | 52 | 47 | 87 |
| 31 | " | G | 50 | 55 | 52 | 47 | 40 | 73 |
| 32 | Imidazol | E | 50 | 57 | 55 | 53 | 49 | 86 |
| 33 | " | G | 50 | 53 | 53 | 47 | 40 | 75 |
| 34 | p-Hydroxy-benzoesäure-K-Salz | E | 50 | 50 | 49 | 44 | 39 | 78 |
| 35 | " | E | 50 | 56 | 55 | 50 | 44 | 80 |
| 36 | Dibutylzinn-laurat | E | 5 | 60 | 50 | 43 | 31 | 52 |
| 37 | " | E | 100 | 58 | 54 | 52 | 49 | 84 |
| 38 | " | E | 200 | 54 | 55 | 50 | 44 | 82 |

\*) Konzentration wie in Tabelle 1

**Ansprüche**

1. Thermotrope, vollaromatische Polykondensate auf Basis von

a) gegebenenfalls substituierten aromatischen Hydroxycarbonsäuren

b) Diphenolen

c) aromatischen Dicarbonsäuren und

d) gegebenenfalls Kohlensäure,

dadurch gekennzeichnet, daß sie zur Komplexbildung befähigte Verbindungen enthalten.

2. Thermotrope, vollaromatische Polykondensate nach Anspruch 1, dadurch gekennzeichnet, daß sie als

9

komplexbildende Verbindungen aromatische Sulfonsäuren enthalten, die mindestens zwei zur Komplexbildung befähigte funktionelle Gruppen in ortho- oder peri-Stellung besitzen.

3. Thermotrope, vollaromatische Polykondensate nach Ansprüchen 1 und 2, dadurch gekennzeichnet, daß sie als komplexbildende aromatische Sulfonsäuren Hydroxyarylsulfonsäuren, Dihydroxyarylsulfonsäuren, Hydroxyaryldisulfonsäuren, Dihydroxyaryldisulfonsäuren und/oder aromatische Carbonsulfonsäuren enthalten.

4. Thermotrope, vollaromatische Polykondensate nach Ansprüchen 1 bis 3, dadurch gekennzeichnet, daß sie Phenol-2-sulfonsäure, 1-Naphthol-2-sulfonsäure, 2-Naphthol-1-sulfonsäure, 1-Naphthol-8-sulfonsäure, Hydrochinonsulfonsäure, Hydrochinondisulfonsäure, 1,8-Dihydroxynaphthalin-3,6-disulfonsäure, 2,7-Dihydroxy-naphthalin-3,6-disulfonsäure, 2-Sulfobenzoesäure, 5-Sulfosalicylsäure, 4-Hydroxy-3-sulfo-benzoesäure und/oder 1-Hydroxy-4,7-disulfo-2-naphthalincarbonsäure enthalten.

5. Thermotrope, vollaromatische Polykondensate nach Ansprüchen 1 bis 4, dadurch gekennzeichnet, daß sie die komplexbildenden Sulfonsäuren teilweise oder vollständig in Form ihrer Salze enthalten.

6. Thermotrope, vollaromatische Polykondensate nach Ansprüchen 1 bis 5, dadurch gekennzeichnet, daß sie die zur Komplexbildung befähigten Verbindungen in Mengen von 1 bis 1000 ppm, bezogen auf die Gesamtmenge an Komponenten a) bis d), enthalten.

7. Verfahren zur Herstellung von thermotropen, vollaromatischen Polykondensaten nach Anspruch 1 durch Veresterung von gegebenenfalls substituierten p-Hydroxybenzoesäuren und aromatischen Dicarbonsäuren mit Diarylcarbonat, Umesterung der erhaltenen Aryl ester mit Diphenolen, gegebenenfalls weiterem Diarylcarbonat, in Gegenwart von gegebenenfalls Kettenabbrechern, und anschließende Polykondensation bei Temperaturen von 150 bis 350° C in Gegenwart von Katalysatoren gegebenenfalls unter vermindertem Druck, dadurch gekennzeichnet, daß man die Umesterungs-und/oder die Polykondensationsreaktion in Gegenwart von zur Komplexbildung befähigten Verbindungen durchführt.

8. Verfahren zur Herstellung von thermotropen, vollaromatischen Polykondensaten nach Anspruch 1, dadurch gekennzeichnet, daß man die zur Komplexbildung befähigten Verbindungen in die nach üblichen Methoden hergestellten thermotropen, vollaromatischen Polykondensate durch nachfolgende Compoundierung einarbeitet.

9. Verwendung der thermotropen, vollaromatischen Polykondensate nach Anspruch 1 zur Herstellung von Formkörpern, Folien, Filmen, Filamenten und Fasern.